# EUROPEAN PATENT APPLICATION

(11) **EP 4 822 618 A1**
(43) Date of publication of application: **14.10.2026**
(21) Application number: 24900726.1
(22) Date of filing: 09.12.2024
(51) Int. Cl.: G06Q 10/0637, G06Q 40/06, G06Q 50/10

(54) **INFORMATION PROCESSING SYSTEM**

(30) Priority: 08.12.2023 JP 2023221922
(71) Applicant: Oshima, Tetsuya, Tokyo 169-0074 (JP)
(72) Inventor: Oshima, Tetsuya, Tokyo 169-0074 (JP)
(74) Representative: HGF
(86) International application number: PCT/JP2024/043407
(87) International publication number: WO 2025/121434

(57) **Abstract**

The present invention pertains to technology of an automatic investment system, and achieves an automatic investment system and a business evaluation system which are capable of maximizing profits irrespective of the skill of a user. The information processing system numerically measures a "Value For Time" indicating the value of a business on the basis of the difference in time cost between an existing business and a new business, the number of users, and the happiness degree.

## Description

### TECHNICAL FIELD

The present invention relates to an information processing system.

### BACKGROUND ART

As an existing automatic investment system, for example, there is known a system that appropriately automates or supports investment and the like using data based on past business valuation of target companies or forecast values forecasted by many people being evaluated as being capable of forecasting stock prices (for example, see Patent Document 1).

In addition, the present inventor showed the possibility that the economic activity, that is, the collective behavior can be guided by utilizing the indicator "Value For Time" in an economics paper (Non-Patent Document 1). Note that the term "Value For Time" described in this economics paper is described as the "Value For Time (paper)" to be clearly distinguished from one (which will be described later) calculated by the information processing system to which the present invention is applied.

### Citation List

### Patent Documents

Patent Document 1: Japanese Patent Application No. 2003-273308

### Non-Patent Documents

Non-Patent Document 1: <Peer-reviewed paper> Tetsuya OSHIMA (2021) "Value For Time: Effect of policies that give an incentive to increasing free time assessed by the changes in medical payment system" 'International Public Economy Studies' Vol. 32

### DISCLOSURE OF THE INVENTION

### Problems to be Solved by the Invention

For example, in the conventional automatic investment systems disclosed in Patent Document 1 and the like, targets for investment have been selected focusing on operating profits and amounts of retained earnings of the target companies. However, these systems could have estimated track records accurately to some extent, but it is difficult to accurately forecast future business performance of target companies for investment. Alternatively, in most cases, the stock prices have already increased even using data based on the stock price variation forecasted by many people being evaluated as being capable of forecasting stock prices. Needless to say, it is necessary to buy a stock low and sell high to generate profits through buying and selling the stock and it is important for stock investment how quickly and accurately the future business performance can be forecasted, but it is difficult for AI to accurately predict the critical value of a planned future business, and therefore a person has no choice but to read new technical development and new service, a revolution of management strategy, and the like of the target company and forecast the future business performance by relying on years of intuition.

The present invention has been made in view of such circumstances to numerically measure a value of a business, and achievement of this object makes it possible to, for example, forecast collective behavior, appropriately automate or support investment for maximizing profits irrespective of a skill of a user, and report business opportunities that have not been seen until now. Means for Solving the Problems

In order to achieve the above object, an information processing system of an aspect of the present invention includes
a "Value For Time" measuring unit for numerically measuring a "Value For Time" indicating a value of a business on the basis of a difference in time cost between an existing business and a new business, the number of users, and happiness index for time.

### Effects of the Invention

According to the present invention, it is possible to maximize profits through buying and selling the stock by enabling not only past business valuation but also future business valuation. In addition, it is possible to continue to improve the entire society by rightfully evaluating all buried businesses and improvement plans that become the profit of the entire society in the direction of reducing the time cost, that is, in the direction of improving the quality of life of people and by raising funds.

### BRIEF DESCRIPTION OF THE DRAWINGS

FIG. 1 is a block diagram of an example of an automatic investment system that performs business valuation measured in time as an embodiment of an information processing system of the present invention;
FIG. 2 is a flowchart illustrating an example of processing to be executed by the system in FIG. 1;
FIG. 3A is a chart illustrating an example of data of service information;
FIG. 3B is a chart illustrating an example of data of service information;
FIG. 3C is a chart illustrating an example of data of service information;
FIG. 3D is a chart illustrating an example of data of service information;
FIG. 4A is a chart illustrating an example of data of need information;
FIG. 4B is a chart illustrating an example of data of need information;
FIG. 5A is a chart illustrating an example of data of a matching list;
FIG. 5B is a chart illustrating an example of data of a matching list;
FIG. 6A is a chart illustrating an example of data of business operator information;
FIG. 6B is a chart illustrating an example of data of business operator information;
FIG. 7A is a chart illustrating an example of data of stock information;
FIG. 7B is a chart illustrating an example of data of stock information;
FIG. 8 is a diagram for explaining a Value For Time; and
FIG. 9 is a schematic diagram for measuring the value of a water supply business by the Value For Time.

### PREFERRED MODE FOR CARRYING OUT THE INVENTION

Hereinafter, an embodiment (hereinafter, referred to as the "present embodiment") of an information processing system of the present invention will be described with reference to the drawings.

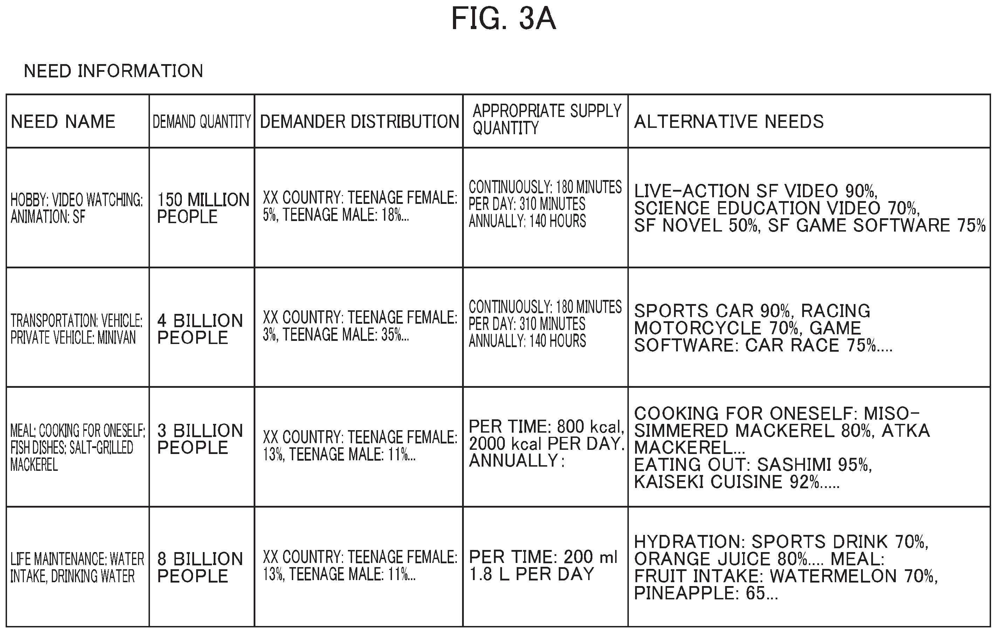

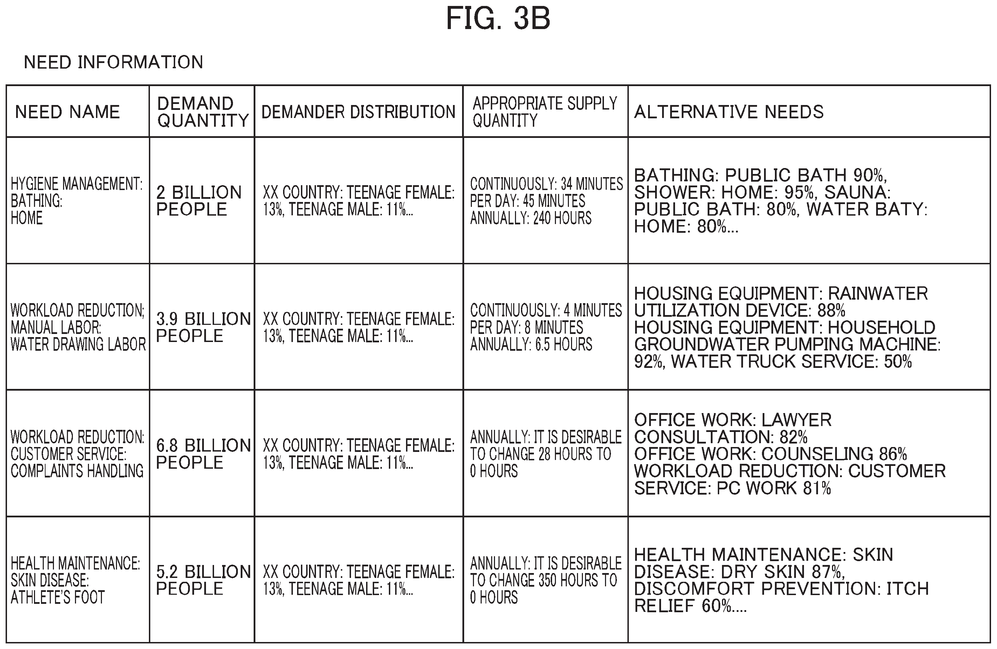

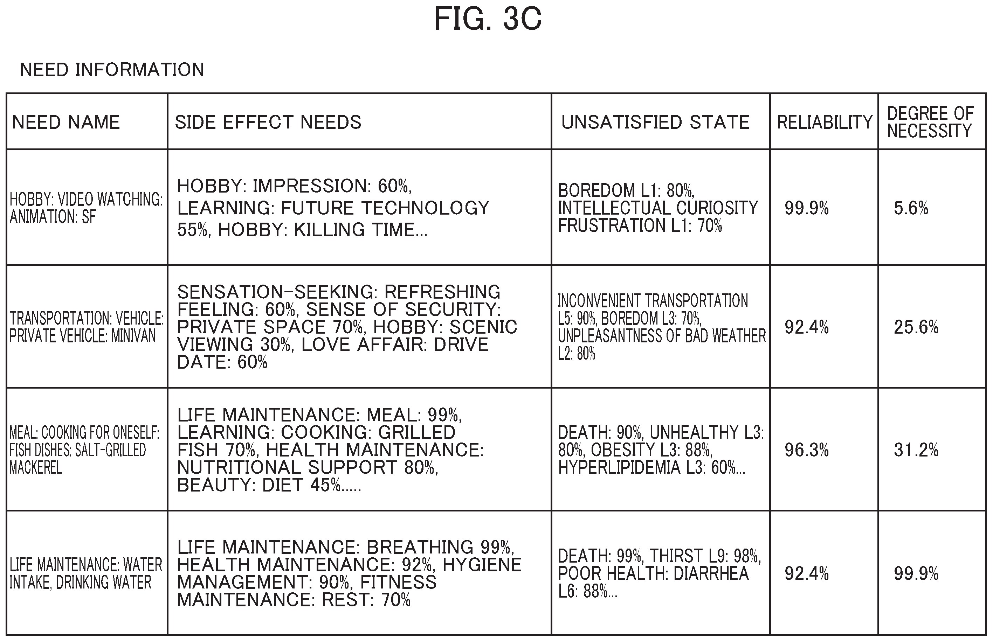

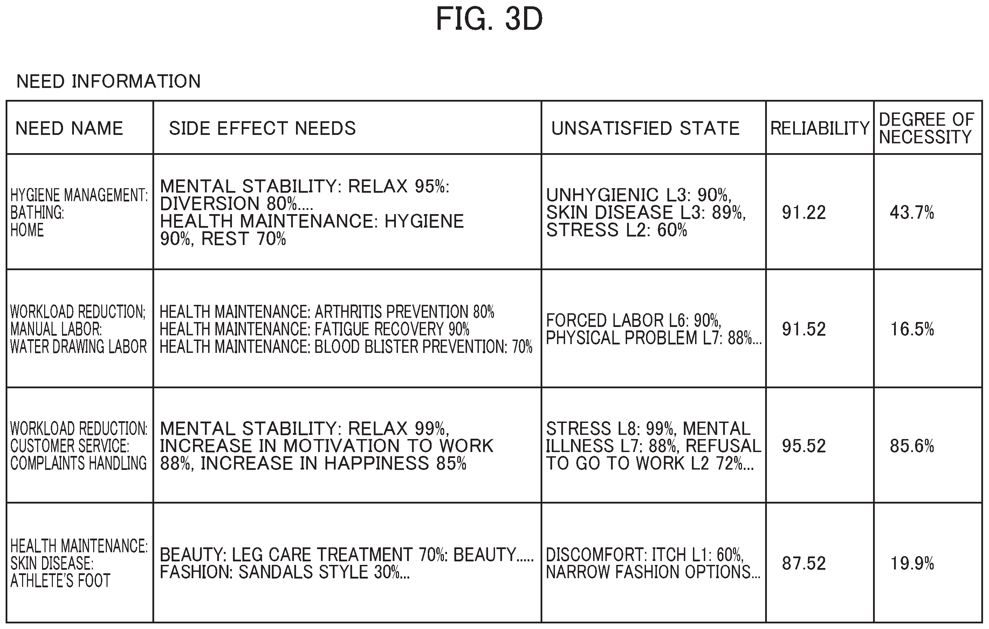

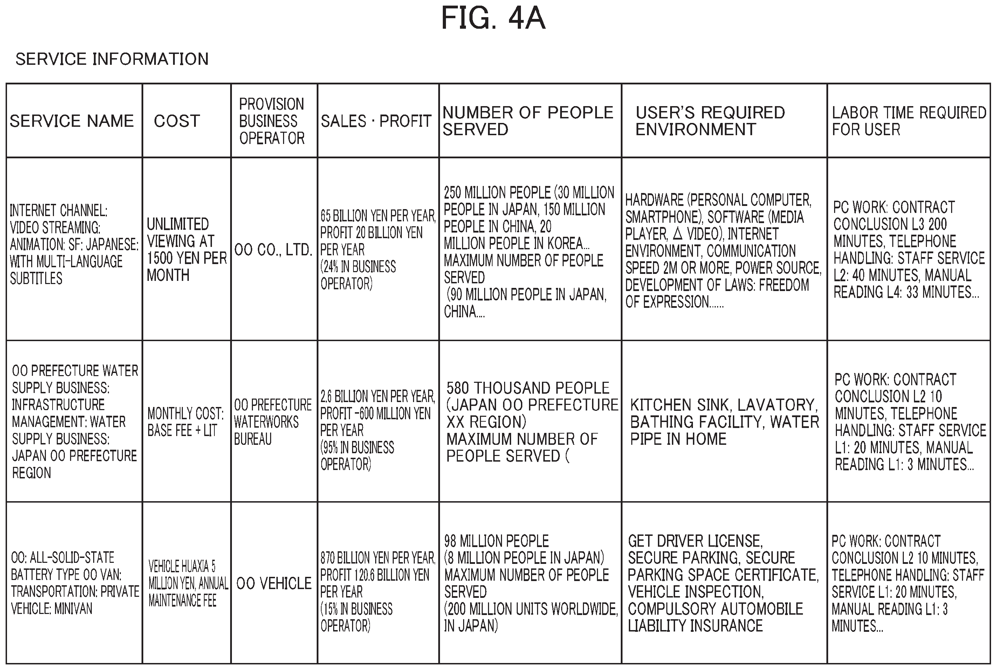

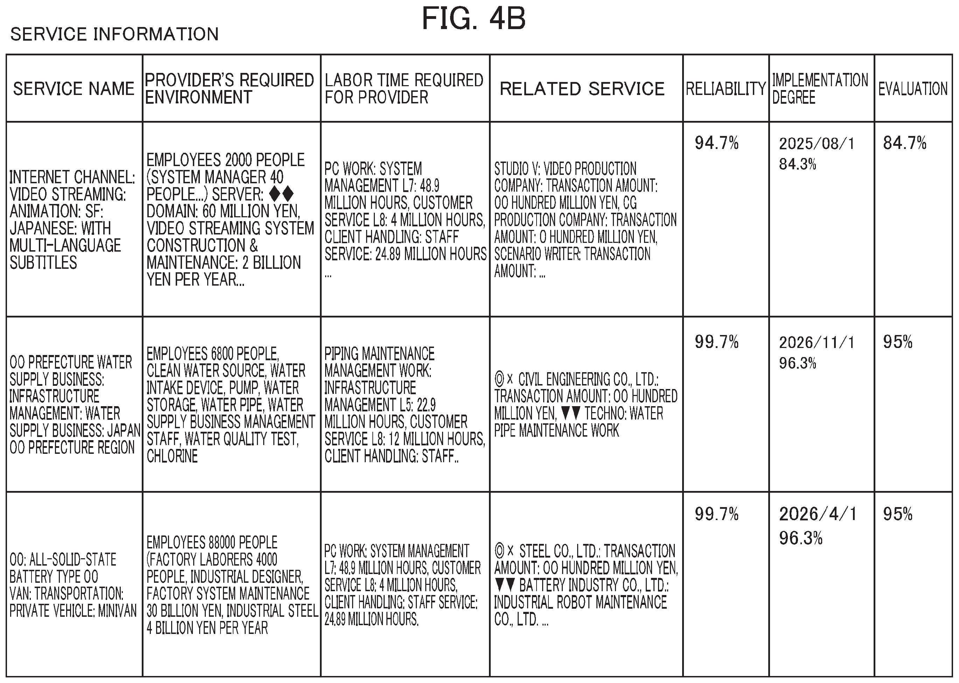

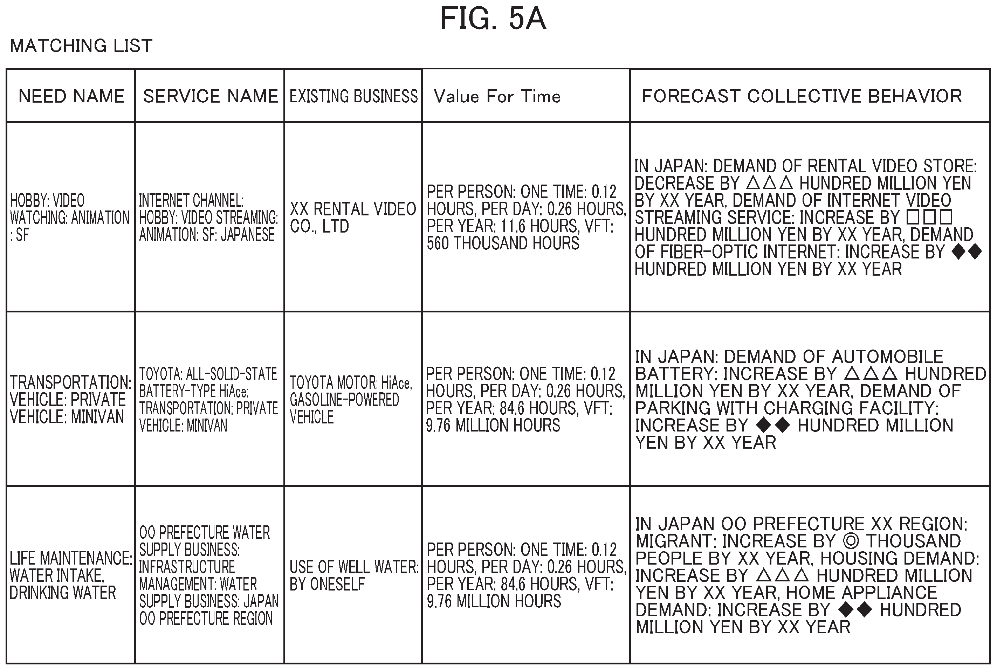

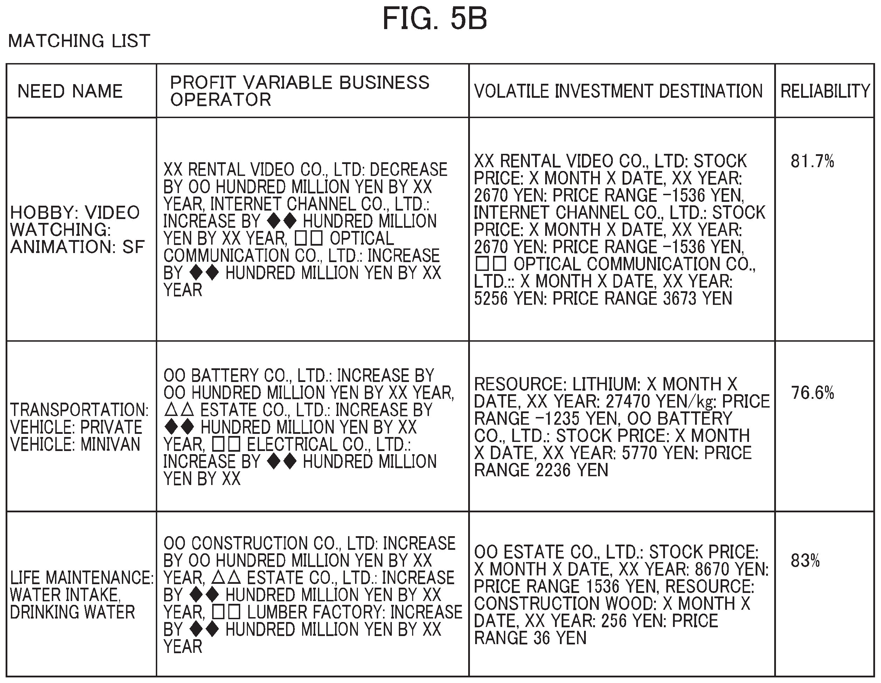

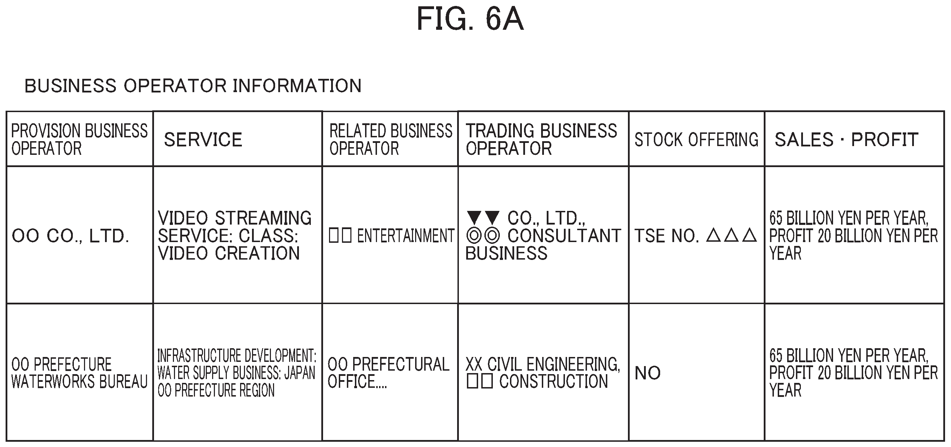

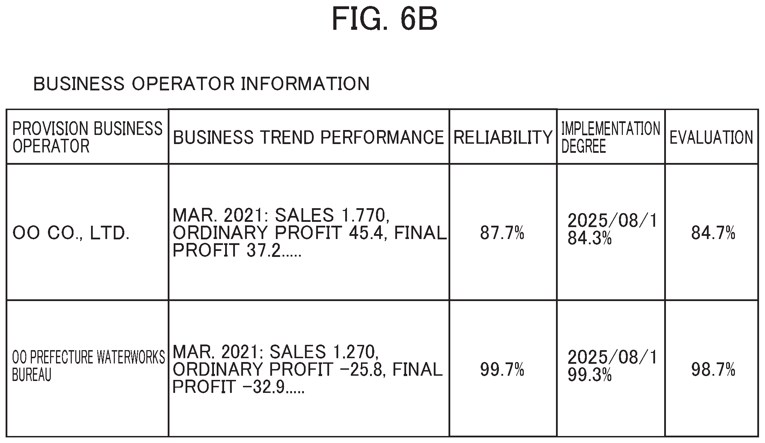

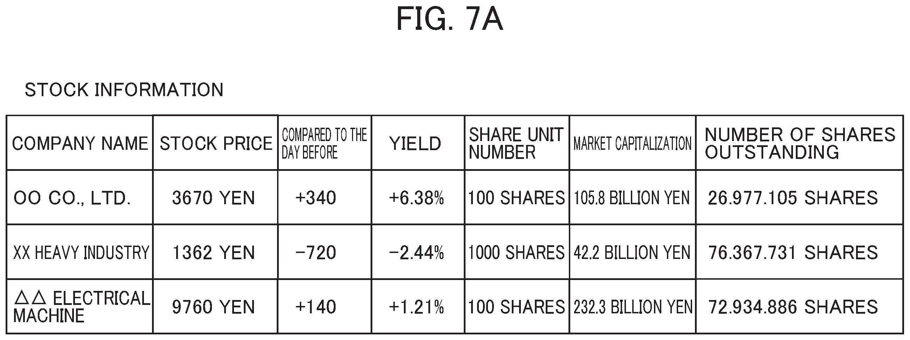

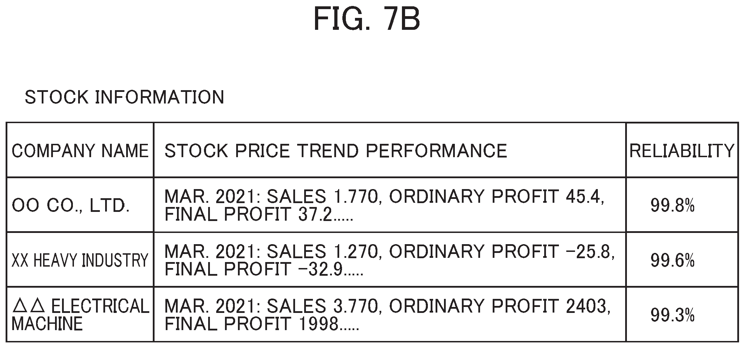

In each of FIGS. 3A to 3D, an example of need information, which will be described later, is illustrated. Therefore, hereinafter, FIGS. 3A to 3D are collectively and simply referred to as "FIG. 3". Similarly, in each of FIGS. 4A and 4B, an example of service information, which will be described later, is illustrated. Therefore, hereinafter, FIGS. 4A and 4B are collectively and simply referred to as "FIG. 4". In each of FIGS. 5A and 5B, an example of a matching list, which will be described later, is illustrated. Therefore, hereinafter, FIGS. 5A and 5B are collectively and simply referred to as "FIG. 4". In each of FIGS. 6A and 6B, an example of business operator information, which will be described later, is illustrated. Therefore, hereinafter, FIGS. 6A and 6B are collectively and simply referred to as "FIG. 6". In each of FIGS. 7A and 7B, an example of business operator information, which will be described later, is illustrated. Therefore, hereinafter, FIGS. 7A and 7B are collectively and simply referred to as "FIG. 7".

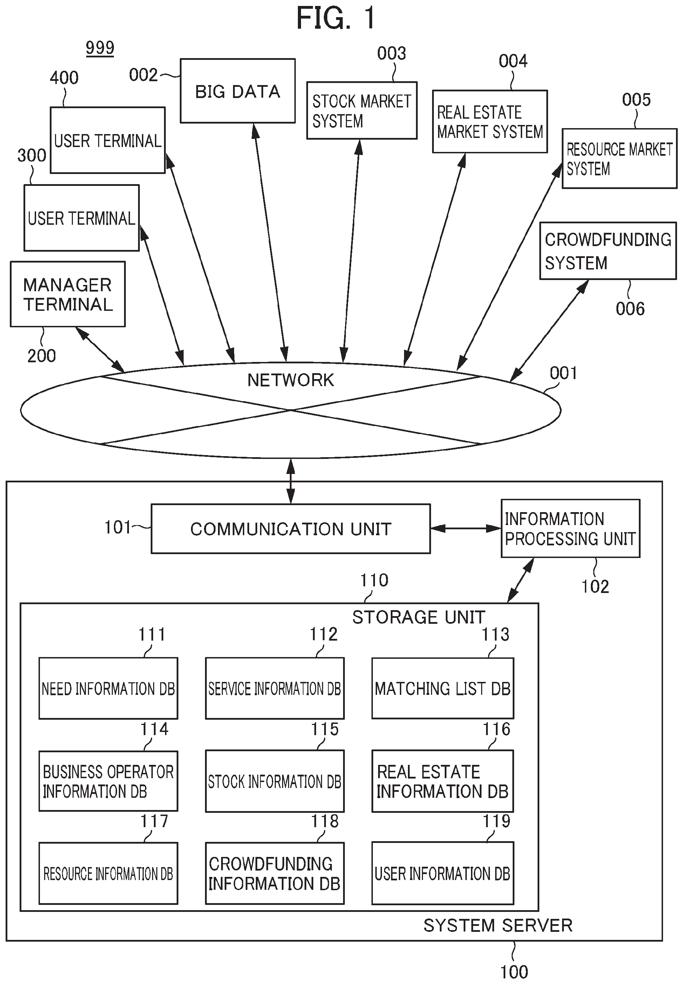

FIG. 1 is a block diagram of an automatic investment system 999 that performs business valuation measured in time in the present embodiment. The automatic investment system 999 is an information processing system that can perform business valuation measured in time and automatic investment, making it possible to perform automatic investment after forecasting future business valuation.

The automatic investment system 999 that performs the business valuation measured in time and the automatic investment (hereinafter, appropriately referred to as "the present system") according to the present embodiment has a configuration in which a plurality of investment market systems as many as possible (although not illustrated here) that are possible to become the investment targets such as a system server 100, a manager terminal 200, a plurality of user terminals such as a user terminal 300, big data 002, a stock market system 003, a real estate market system 004, a resource market system 005, and a crowdfunding system 006 are mutually connected through a network 001 such as Internet and a local area network.

Although not particularly illustrated, the server system 100 is a system that includes an information processing device including a central processing unit (CPU), a read-only memory (ROM), a random-access memory (RAM), and the like, a storage device, and a communication device such as an online system that can input and output information from and to terminals for managers and users, an online system linked with banks that manages receipt and payment of funds for investment transaction, and a wired or wireless network interface. The manager terminal 200, the user terminal 300, and the like are various terminals such as a smartphone terminal and a tablet terminal. In the example of FIG. 1, although omitted for ease of illustration, the server system 100 is actually connected to one to many terminals, each terminal having a communication unit and a processing unit to be able to input and output information. The automatic investment system 999 that performs the business valuation measured in time is an example, and is replaceable with a system having similar functions.

In FIG. 1, the system server 100 includes an information acquisition unit 101 that analyzes the big data 002 and information of various investment market systems through the network 001 such as Internet, and collects the information determined to be useful for the present system, an information processing unit 102 that appropriately processes the information and the like, and a storage unit 110 that can read and write the information before and after the information is processed. In the automatic investment system 999 that performs the business valuation measured in time and the automatic investment, the storage unit 110 also includes a need information DB 111 in which information about all needs are stored, a service information DB 112 in which information about businesses that can satisfy these needs is stored, a matching list DB 113 which is a list in which "need information" is matched with "service information", a business operator information DB 114 in which information about business operators providing the service is stored, a stock information DB 115 in which stock information is stored, a real estate information DB 116 in which real estate information is stored, a resource information DB 117 in which resource information is stored, a crowdfunding DB 118 in which crowdfunding information is stored, a user DB 119 in which authority and a range of a member (user) who uses the present system (automatic investment system 999 that performs the business valuation measured in time and the automatic investment), a timing of information disclosure, and the like are stored.

In this specification, the "needs" represent all kinds of need data of humanity. In this specification, the "need information" is a data list that covers and records as many as possible of kinds of needs (human needs) stored in the present system. According to the example in FIG. 3, which will be described later, as an example, a kind of need is stored in a "need name", but a concrete action is subdivided up to a purpose of the action. The need in a simple state such as a "hobby" and "life maintenance" is not regarded as a purpose, and the need is represented by being subdivided up to the need satisfied by the concrete action such as "hobby: video watching: animation: SF". For example, the "life maintenance" is present as a category, and is stored by being subdivided up to goods or actions taken such as "life maintenance: drinking water". In the "demand quantity", the "demander distribution", and the like for the corresponding need, the information about country, sex, age, income class, etc. is stored. In the "appropriate supply quantity", an average supply quantity required to satisfy the need is stored. In the "alternative needs", needs with which the corresponding need can be replaced are stored. In the "side effect needs", other needs satisfied simultaneously by satisfying the corresponding needs are stored. In the "unsatisfied state", states generated when the need is not satisfied are stored. In the "reliability", the reliability of the need information is stored. In the "degree of necessity", the degree of necessity of the need is stored as a numerical value. The "need name" in the need information of the example in FIG. 3 described above is an essential item. Of course, items may be added or modified in the future. The need information is obtained by analyzing the big data to know what people want to achieve by taking the action, and quantifying the results of analysis of time cost (money, time and effort, risk) performed in compensation for taking the action. In addition to that, the need information may be collected by various questionnaire surveys and psychological tests, simulations, and the like. An estimated value is substituted for the insufficient portion. However, the increased use of estimated values causes deterioration in reliability.

In this specification, the "service" refers to all businesses, products, technologies, services, ideas, patents, papers, activities, infrastructures, laws and regulations, administrations regardless of whether or not compensation for satisfying the need is received, and is not limited to service having general meaning. In this specification, the "business operator" refers to one including a government, a local government, a non-profit organization, and an individual without being limited to a for-profit company. In this specification, the "service information" refers to data of the service information in FIG. 4 or similar data to the same. The item of the "service name" in the service information in FIG. 4 is an essential item. This is because the matching is determined by the "need name" in the need information and the "service name" in the service information when matching the need information with the service information. In addition, the essential item may be added or modified. A method of collecting data of various items in the service information is the same as that for the need information. Here, the "service name" in the service information is subdivided up to a concrete action. The need in a simple state such as the "hobby" and the "life maintenance" is not regarded as a service, and the need is represented by being subdivided up to the need satisfied by the concrete action such as "internet channel: video streaming: animation: SF: Japanese, with multi-language subtitles". In addition, components such as the DBs illustrated in FIG. 1 are examples, and can be replaced with, added with, or changed to the other components having the similar function.

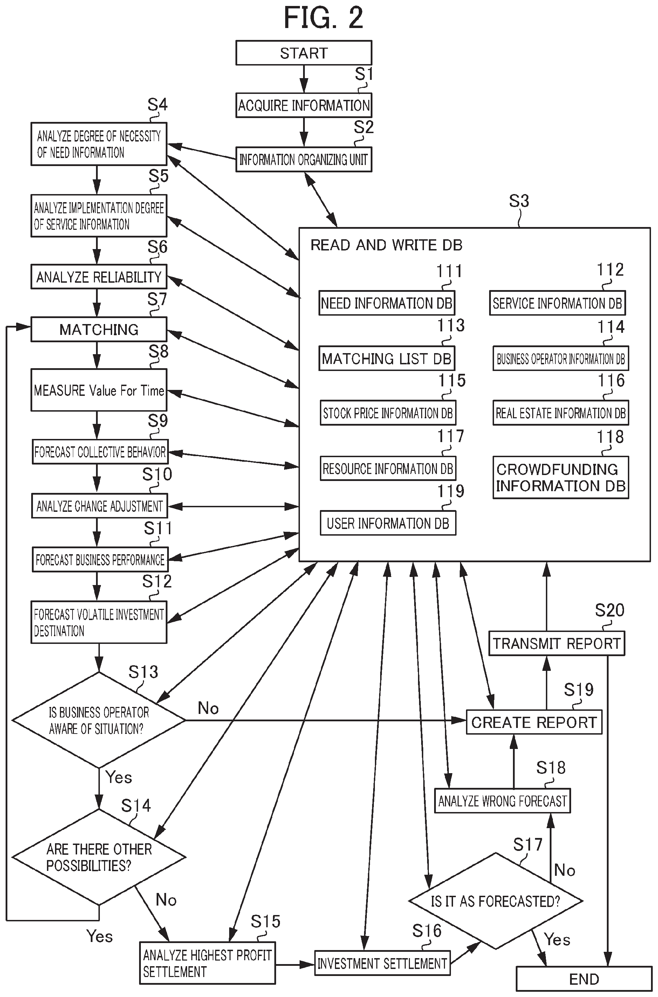

Next, a flow of information processing will be described using a flowchart in FIG. 2.

In step S1 of acquiring information, an information acquisition unit 101 collects data determined to be required for the present system from the big data 202 and various markets.

In step S2 of an information organizing unit, the information acquisition unit 101 appropriately stores data collected in step S1 in various databases in the storage unit 110.

In step S3 of reading and writing DB, the information processing unit 102 reads the information from the necessary DB in the storage unit 110 before the process in each of all the steps performed after step S3, and writes the process results to the corresponding portion after the process is completed.

In step S4 of analyzing the degree of necessity of need information, the information processing unit 102 stores an appropriate value, as a value indicating the degree of necessity of the need information, in an item "degree of necessity" in the "need information" in FIG. 3. Here, the degree of necessity is measured by a difference between a time cost when people in a category who request the need information do not take an action satisfying the need while maintaining the status quo and a time cost in an ideal state in which the need is completely satisfied. That is, degree of necessity = time cost when action satisfying need is not taken - time cost in ideal state in which need is completely satisfied. Here, hereinafter, the "time cost when an action satisfying the need is not taken" is referred to as a "no-action time cost". In addition, the "ideal time cost when the need is completely satisfied" is referred to as an "ideal state time cost". In this case, 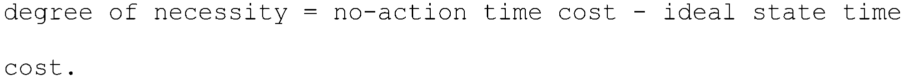 degree of necessity = no-action time cost - ideal state time cost. Note that the data of the degree of necessity in the example in FIG. 3 is expressed by a value of % for easy understanding. Actually, the degree of necessity is represented by a difference between the no-action time cost and the ideal state time cost as described above, and therefore is expressed in the number of hours similar to the "Value For Time". The degree of necessity in a case of "health maintenance: skin disease; athlete's foot" is as follows. A difference obtained by subtracting, from 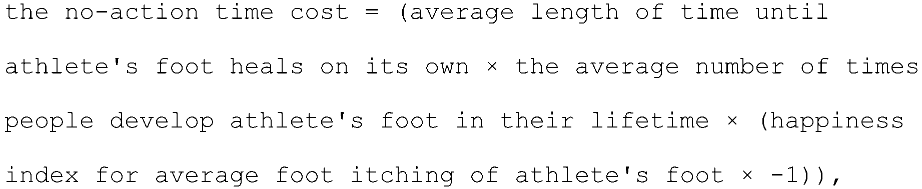 the no-action time cost = (average length of time until athlete's foot heals on its own × the average number of times people develop athlete's foot in their lifetime × (happiness index for average foot itching of athlete's foot × -1)), 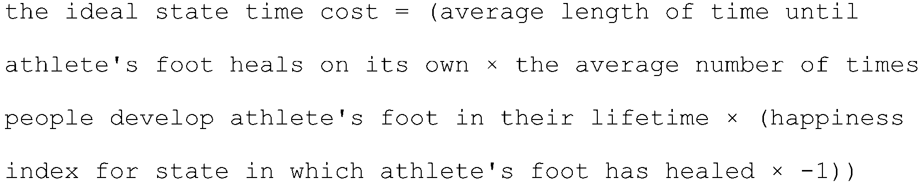 the ideal state time cost = (average length of time until athlete's foot heals on its own × the average number of times people develop athlete's foot in their lifetime × (happiness index for state in which athlete's foot has healed × -1)) becomes the degree of necessity in a case of "health maintenance: skin disease; athlete's foot". For easy understanding, only a difference for an "unhealthy time cost" is expressed as described above. A detailed equation including a work achievement time cost and a fund-raising time cost will be described later. The average happiness index until the "appropriate supply quantity" in the "need information" is satisfied and the time until the appropriate supply quantity is satisfied are measured. For more accurate calculation, the appropriate supply quantity can also be represented by a formula for measuring a change quantity of the happiness index. For example, in a case of "life maintenance: eating and drinking; drinking water", the first sip of water drunk when thirsty feels like pure relief and the happiness index is high, but the taste of water, that is, the happiness index decreases the more one drinks, and forcibly drinking many liters of water exceeding the appropriate supply quantity becomes painful. Expressing these change quantities as the formula makes it possible to measure more accurate happiness index and the degree of necessity based on the happiness index.

Here, the degree of necessity of the need for avoiding an irreversible state will be described. The irreversible state refers to, for example, a state in which a person will die if left untreated or will be left with a permanent disability. A method of calculating the degree of necessity of the need for avoiding this irreversible state is as follows, for example. A difference obtained by subtracting, from 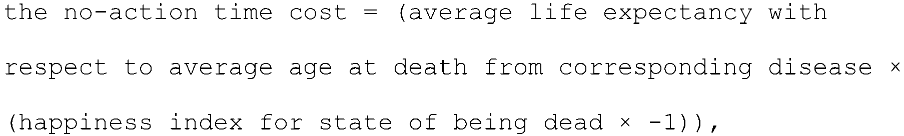 the no-action time cost = (average life expectancy with respect to average age at death from corresponding disease × (happiness index for state of being dead × -1)), 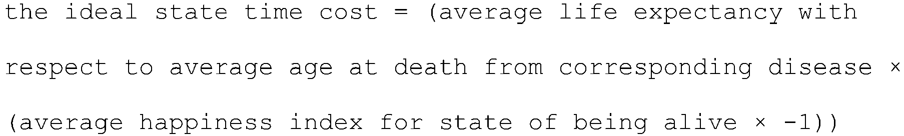 the ideal state time cost = (average life expectancy with respect to average age at death from corresponding disease × (average happiness index for state of being alive × -1)) becomes the degree of necessity of the need for avoiding the irreversible state. Note that the happiness index for the state of being dead can also be said as zero because a person does not feel anything, but here, it is believed that it is appropriate to set the state of being dead as a reference in consideration of the happiness index for such average pain as to cause a state of desiring death and the length of time of pain to lead to suicide. Examples of the irreversible state other than death include a case where a state in which limbs or sensory organs do not function lasts a lifetime. On the basis of the average happiness index for the state, it becomes possible to measure the degree of necessity of the need for avoiding the irreversible state in the same manner.

In a case where this is the need of "healing of cerebral infarction", the need is skewed toward a certain age such as average life expectancy with respect to average age for cerebral infarction as an amount of time, and the degree of necessity is measured on the basis of the average age when the need arises. An example of a specific method of calculating each time cost using $\begin{matrix}no - action time cost = work achievement time cost + fund - \\ raising time cost + unhealthy time cost \\ is shown as follows . Work achievement time cost of no - action \\ time cost = \\ \left(\begin{matrix}average time required for end - of - life planning \times \left(\begin{matrix}average \\ happiness index for time for end - of - life planning \times - 1\end{matrix}\right) \times \\ death probability at onset of cerebral infraction\end{matrix}\right) \\ + \left(\begin{matrix}average life expectancy with respect to average age of \\ onset of cerebral infraction \times \left(\begin{matrix}average happiness index for \\ time for sequelae of cerebral infraction \times - 1\end{matrix}\right) \times probability \\ of sequelae onset over lifetime at onset of cerebral \\ infarction\end{matrix}\right) \\ + \left(\begin{matrix}average exceeded time over work time required for living \\ due to sequelae of cerebral infraction \times \left(\begin{matrix}average happiness \\ index for work time during sequelae at onset of cerebral \\ infraction \times - 1\end{matrix}\right) \times probability of temporary sequelae onset of \\ cerebral infraction\end{matrix}\right)\end{matrix}$ $\begin{matrix}Fund - raising time cost of no - action time cost = \\ \left(\begin{matrix}\left(\left(end-of-life expenses/average hourly wage\right)\times \left(\begin{matrix}average \\ happiness index for labor time \times - 1\end{matrix}\right)\right) \times death probability at \\ onset of cerebral infarction\end{matrix}\right) \\ + \left(\left(\begin{matrix}\left(\begin{matrix}annual nursing care expenses for sequelae of cerebral \\ infarction \times average life expectancy \left(year\right) with respect to \\ average age of onset of cerebral infarction\end{matrix}\right) / average hourly \\ wage\end{matrix}\right)\times \left(average happiness index for labor times\times -1\right)\right) \times \\ probability of sequelae onset over lifetime at onset of \\ \left.crerebral infarction\right) \\ + \left(\begin{matrix}\left(\left(\begin{matrix}annual nursing care expenses for sequelae of cerebral \\ infarction \times average year to naturally heal cerebral \\ infarction\end{matrix}\right)/average hourly wage\right) \times \left(\begin{matrix}average happiness index \\ for labor times \times - 1\end{matrix}\right) \times probability of temporary sequelae \\ onset at onset of cerebral infarction\end{matrix}\right) \\ Unhealthy time cost of no - action time cost = \\ \left(\begin{matrix}average life expectancy with respect to average age of onset \\ of cerebral infarction \times \left(\begin{matrix}happiness index for state of being \\ dead \times - 1\end{matrix}\right) \times death probability at onset of cerebral infarction\end{matrix}\right) \\ + \left(\begin{matrix}\left(\begin{matrix}average life expectancy with respect to average age of \\ onset of cerebral infarction \times \left(\begin{matrix}average happiness index for \\ sequelae of cerebral infarction \times - 1\end{matrix}\right)\end{matrix}\right) \times probability of \\ sequelae onset over lifetime at onset of cerebral infarction\end{matrix}\right) \\ + \left(\begin{matrix}\left(\begin{matrix}average year to naturally heal cerebral infarction \times \\ \left(\begin{matrix}average happiness index for sequelae of cerebral infarction \times \\ - 1\end{matrix}\right)\end{matrix}\right) \times probability of temporary sequelae onset at onset of \\ cerebral infarction\end{matrix}\right)\end{matrix}$ The no-action time cost is measured by summing them up, and the ideal state time cost is subtracted from the measured value. Since ideal state time cost = work achievement time cost + fund-raising time cost + unhealthy time cost, work achievement time cost of ideal state time cost = time necessary for preventing cerebral infarction in lifetime × (average happiness index for work time for preventing cerebral infarction × -1) 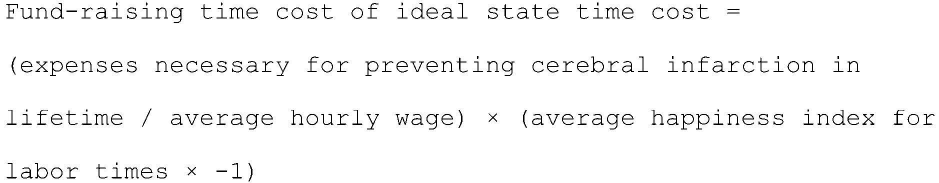 Fund-raising time cost of ideal state time cost = (expenses necessary for preventing cerebral infarction in lifetime / average hourly wage) × (average happiness index for labor times × -1) $\begin{matrix}Unhealthy time cost of ideal state time cost = \\ \left(\begin{matrix}average life expectancy with respect to average age of onset \\ of cerebral infraction \times \left(\begin{matrix}average happiness index for state of \\ being alive \times - 1\end{matrix}\right)\end{matrix}\right) \times death probability at onset of cerebral \\ \left.infarction\right) \\ + \left(\begin{matrix}average life expectancy with respect to average age of \\ onset of cerebral infarction \times \left(\begin{matrix}average happiness index for \\ state of being alive \times - 1\end{matrix}\right) \times probability of sequelae onset \\ over lifetime at onset of cerebral infarction\end{matrix}\right) \\ + \left(\begin{matrix}average year to naturally heal cerebral infarction \times \\ \left(average happiness index for state of being alive\times -1\right)\end{matrix}\right) \times \\ probability of temporary sequelae onset at onset of cerebral \\ \left.infarction\right)\end{matrix}$ The ideal state time cost is measured by summing them up, and the time corresponding to a difference by subtracting the measured value from the no-action time cost becomes the degree of necessity.

Returning to FIG. 2, in step S5 of analyzing an implementation degree of the service information, the information processing unit 102 measures, as the implementation degree, to what degree new service of the service information can be implemented with published effects on the published due date. For example, the information processing unit 102 analyzes the implementation degree using the track records and development examples of similar technology of the corresponding business operator, and stores the analyzed value in the item "implementation degree" in the "service information" in FIG. 4.

Here, as the implementation degree, the probability of providing the corresponding technology or service by the due date is calculated. The probability of a numerical value of the implementation degree is calculated by multiplying technical implementation ratio of the implementation degree 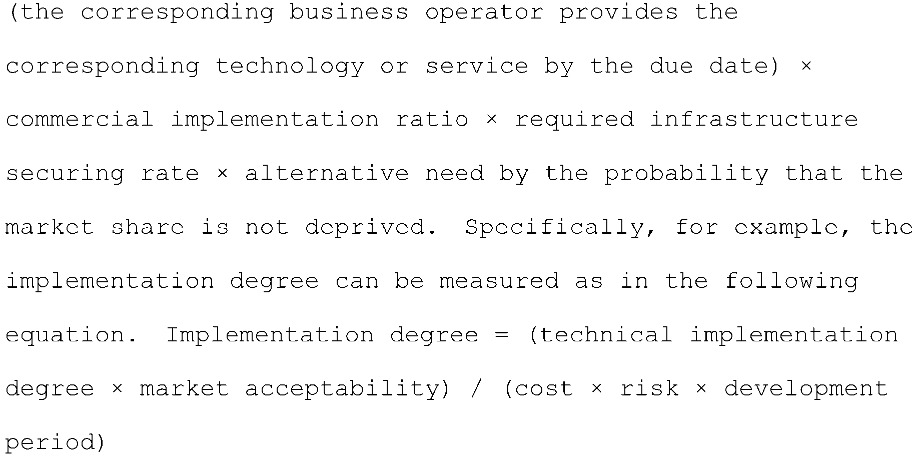 (the corresponding business operator provides the corresponding technology or service by the due date) × commercial implementation ratio × required infrastructure securing rate × alternative need by the probability that the market share is not deprived. Specifically, for example, the implementation degree can be measured as in the following equation. Implementation degree = (technical implementation degree × market acceptability) / (cost × risk × development period) Here, the technical implementation degree means the degree of the determination whether new technology can be technically implemented, and specifically, for example, the degree of the determination whether it can be implemented using the existing technology or the level of research and development stage. The market acceptability means the degree of probability of the market accepting the technology or service. Market research, user expectations, and the like are reflected for the market acceptability. The implementation degree rates on a scale of 1 to 100. The scale 100 means completely implementable, and the scale 1 means very difficult technically. The cost means a cost required for development and introduction. This cost includes expenses required for implementation of the technology and a running cost. For example, when the implementation degree rates on a scale of 1 to 100, the scale 100 means that the market accepts the technology very positively. For example, when the implementation degree rates on an inverse scale of 1 to 100, the scale 100 means very low cost, and the scale 1 means very high cost. On the inverse scale of 1 to 100, the scale 100 indicates that a risk is extremely low. The risk means technical, economical, or social risk. The risk includes the possibility that a project fails, legal issues, and the like. The development period means time required until the technology or service is implemented. On the inverse scale of 1 to 100, the scale 100 means that the risk is extremely low. The development period means time required until the technology or service is implemented. On the inverse scale of 1 to 100, the scale 100 means that the technology or service can be implemented in a short period. When using the above-described equation for the implementation degree, it is also important to reflect the weight of each element. For example, when the technical implementation degree is more important than the market acceptability, a high weight coefficient is set to multiply the technical implementation degree. Adjusting a coefficient of each parameter according to real social situations in test operation enables evaluation further adapted to actual situations.

In step S6 of analyzing the reliability, the information processing unit 102 estimates an insufficient portion and supplements the reliability. The information processing unit 102 stores an appropriate numerical value in the item "reliability" in each DB according to high number of estimates and the reliability of the evidence of an information source at this time. Here, the reliability is an indicator which becomes 100% when numerical values for all items of each data are determined and the determined numerical values can be collected, and decreases when a numerical value for each item is not determined and an estimated value is substituted for the numerical value. For example, in a case of the need information "hobby: video watching: animation: SF" in FIG. 3, for items of the "demand quantity", the " demander distribution", the "appropriate supply quantity", the "alternative needs", the "side effect needs", and the "unsatisfied state", and the "degree of necessity", and the like, the determined numerical values are collected by market statistics or the like, and therefore, the reliability is "99.9%". On the contrary, in a case of the need information in FIG. 4, due to information relating to future service provision, the information for each item is collected by being estimated on the basis of management performance and a success rate of similar service provision of the business operator, and therefore, the reliability is "94.7%". However, the importance on the reliability may vary depending on a numerical value of each item.

In step S7 of matching, the information processing unit 102 matches each kind of need information with the corresponding service information, and updates a matching list DB (if it already exists) for storing the matching results as illustrated in FIG. 5 or newly creates the matching list DB (if not). Note that the service information corresponding to the need information is diversified. For example, the information processing unit 102 creates the "matching list" for each kind of the "service information" that can satisfy the needs such as the "alternative needs", the "side effect needs", and the "unsatisfied state" in the "need information", and, if it already exists, updates the corresponding portions. Specifically, for example, the service information corresponding to the need "water intake: drinking water" include a lot of information such as "water supply business", "housing equipment: household well pump", and "housing equipment: rainwater utilization device", and different versions of products having similar functions and other companies' products are also stored as the matching list. In addition, for example, the service information in which the water supply business satisfies the needs may be diversified. In addition to the "hydration intake: drinking water", a plurality of needs such as "hygiene management: bathing: home", "health maintenance: skin disease prevention", "hobby: gardening" are satisfied, and therefore, become stored data of the other matching lists. For example, the information of the matching list varies for each region providing the service. These matching lists having combinations as many as possible as illustrated in FIG. 5 are created in step S7.

For example, the information processing unit 102 checks whether the service corresponding to the need is provided, by comparing the "need name" in the need information with the "service name" in the service information. More specifically, for example, the "video streaming: animation: SF: Japanese, with multi-language subtitles" in the service information corresponding to the "hobby: video watching: animation: SF" in the need information is a service satisfying the need, and therefore, is one of the matching list. At this time, a plurality of services often match one need. In a case of video watching, not only one company but also the other companies often provide similar services, and people can watch videos by using internet distribution, by borrowing the videos at rental video stores, and by purchasing the videos. These are registered as different services. Then, the information processing unit 102 registers matchings with all the services satisfying these needs as different matching lists.

In step S8 of measuring a "Value For Time", the information processing unit 102 compares a time cost required for the service in the matching list created by the process in step S7 to satisfy the need in the need information with a time cost of the existing business most used in the provision range. The information processing unit 102 measures the difference as the comparison result once per person, per person annually, and by multiplying the number of users.

Here, the "Value For Time" will be explained below.

The "Value For Time" refers to one represented by the following (1).
(1) The "Value For Money" which is an indicator frequently used in Economics is measured by a difference between a cost of existing business and a cost of new business.

### (See left side of FIG. 6)

On the contrary, the "Value For Time" proposed by the inventor is measured by a difference between a time cost of existing business and a time cost of new business.

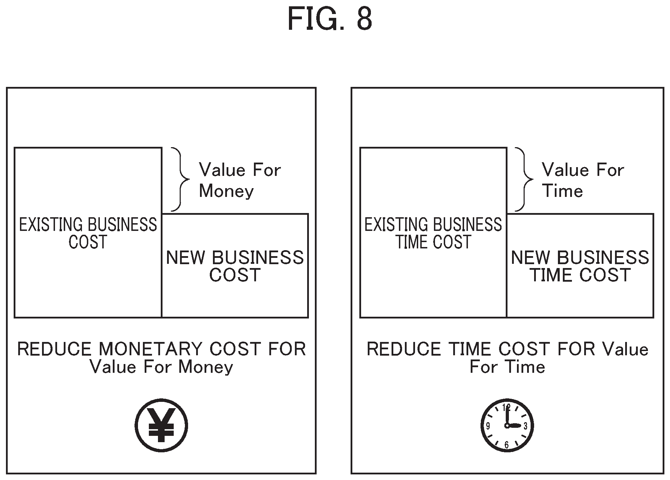

### (See FIG. 8)

Here, the time cost refers to a time cost required from a time point when each need is desired to when implementation of the need is achieved. The time cost can be calculated by time cost = required number of hours × (happiness index × -1). In this specification, the happiness index is defined as a numerical value representing how happy or unhappy people in the corresponding category feel for the time until each need is achieved.

An example for measuring the happiness index is a stimulus quantity of a pleasure center. It is known that the pleasure center is stimulated when people feel happy, the displeasure center is stimulated when people feel unhappy, the type of brain wave changes when each center is stimulated, and the intensity of brain wave also changes depending on stimulus quantity. The type and intensity of brain wave can be measured as the happiness index. The secretion amount of hormones creating feelings of pleasure and the secretion amount of hormones creating feelings of displeasure can be measured as the happiness index. Alternatively, the happiness index seems to be able to be measured as a numerical value by a questionnaire survey, a psychological test, or the like. There is a view that pleasure and happiness are different, but, for example, "unconditional love" is provided because pleasure is felt in the brain. For example, the act of parents dedicating themselves to their children without expecting anything in return is performed because the parents feel pleasure in the brain. Therefore, it is considered that the happiness can be measured by the feeling intensity of pleasure and displeasure. At this time, the time to be measured is the time required to reach the "appropriate supply quantity" in the "need information". Alternatively, the time can be measured by increasing or decreasing the happiness index according to the formula for the "appropriate supply quantity". As an example of a reference value of the happiness index, the state of feeling nothing is defined as the happiness index 0%, and the happiness index when work (labor) for average money is performed is defined as -100%. When the reference value is determined, the happiness index through each act can be calculated on the basis of the number of hours obtained by dividing the cost of goods acquired by paying money, experience, or the act by proxy by average hourly wage. The majority of happiness index can be measured with the happiness index when working as a reference. However, the invaluable happiness index can be measured on the basis of the pain as to cause suicidal wishes or the desired action accompanied with the risk of death as a reference, as an example For example, driving a car increases the risk of traffic death. Since people determine that advantages exceed the risk of death, they drive a car. Even if a fighter has the possibility of losing decades of life due to death during the match, when the fighter bets everything on the match for one hour, the happiness index corresponds to only the risk. Alternatively, various basic tasks such as cleaning performed by most people to maintain daily life can be set as a reference value. On the contrary, the basic happiness index savored by most people such as when satisfying hunger, when quenching thirst, when bathing, and the moment of entering sleep can be set as a reference value. On the basis of such reference values, various types of happiness index can be measured.

A calculation method for the "Value For Time" is as shown by the following (2).

### (2) Calculation Method

The time cost is calculated separately for each of work achievement time, fund-raising time, and unhealthy time of the corresponding business. The calculation method is as shown in the following equation. $\begin{matrix}" Value For Time " = \\ \left(\begin{matrix}work achievement time of existing business \times \left(\begin{matrix}happiness index \\ for work achievement time of existing business \times - 1\end{matrix}\right) \\ + fund - raising time of existing business \times \left(\begin{matrix}happiness index \\ for fund - raising time of existing business \times - 1\end{matrix}\right) \\ + unhealthy time of existing business \times \left(\begin{matrix}happiness index for \\ unhealthy time of existing business \times - 1\end{matrix}\right)\end{matrix}\right) \\ - \left(\begin{matrix}work achievement time of new business \times \left(\begin{matrix}happiness index \\ for work achievement time of new business \times - 1\end{matrix}\right) \\ + fund - raising time of new business \times \left(\begin{matrix}happiness index for \\ fund - raising time of new business \times - 1\end{matrix}\right) \\ + unhealthy time of new business \times \left(happiness index for unhealthy time of new business\times -1\right)\end{matrix}\right)\end{matrix}$

An example of "Value For Time" is as shown in the following (3), for example.

### (3) Example

For example, when a value for infrastructure called water supply is evaluated by the "Value For Time", the "Value For Time" is calculated as follows. That is, a value for the water supply business is shorten the time from when people think that they "want to use water" until when they can use the water. To measure a difference between the times, in the existing business without water supply and the new business with water infrastructure fully developed, the information processing unit 102 measures a difference between a total time of work achievement time, fund-raising time, and unhealthy time of the existing business and a total time of work achievement time, fund-raising time, and unhealthy time of the new business on the basis of the following formulas.

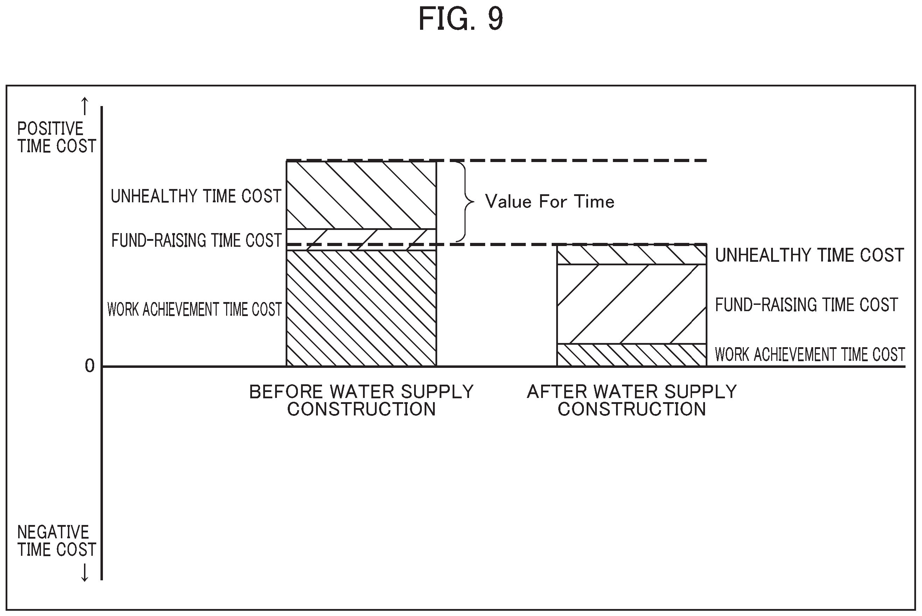

### (See FIG. 9)

| |
|---|
| • Work achievement time of existing business = (time required to go to water source to draw water using bucket × cumulative number of use times to go to water source to draw water using bucket × (happiness index for time required to go to water source to draw water using bucket × -1)) + (time required for water intake × (happiness index for time required for water intake × -1)) |
| • Fund-raising time of existing business = (cost required to go to water source to draw water using bucket × cumulative number of use times to go to water source to draw water using bucket) / average hourly wage × (happiness index for labor time × -1) |
| • Unhealthy time of existing business = unhealthy time before water supply construction × the number of users × (happiness |
| index for unhealthy time × -1) |
| • Work achievement time of new business = (time spent drawing water from faucet of water supply × cumulative number of use times to draw water from faucet of water supply × (happiness index for time spent drawing water from faucet of water supply × -1)) + (time required for water intake × the number of use times required for water intake × (happiness index for time required for water intake × -1) |
| • Fund-raising time of new business = cost required to maintain water supply construction / average hourly wage × (happiness index for labor time × -1) |
| • Unhealthy time of new business = unhealthy time after water supply construction × the number of users × (happiness index for unhealthy time × -1) |

Therefore, the "value For Time" for water supply is calculated in the following equation. $\begin{matrix}" Value For Time " for water supply \\ = \left(\begin{matrix}\left(\left(\begin{matrix}time required to go to water source to draw water using \\ bucket \times cumulative number of use times to go to water source \\ to draw water using bucket \times \left(\begin{matrix}happiness index for time \\ required to go to water source to draw water using bucket \times - \\ 1\end{matrix}\right)\end{matrix}\right)+\left(time required for water intake\times \left(\begin{matrix}happiness index for \\ time required for water intake \times - 1\end{matrix}\right)\right)\right) \\ + \left(\left(\begin{matrix}cost required to go to water source to draw water using \\ bucket \times cumulative number of use times to go to water source \\ to draw water using bucket\end{matrix}\right)/average hourly wage\times \left(\begin{matrix}happiness \\ index for labor time \times - 1\end{matrix}\right)\right) \\ + \left(\begin{matrix}unhealthy time before water supply construction \times the \\ number of users \times \left(happiness index for unheathy time\times -1\right)\end{matrix}\right)\end{matrix}\right) \\ - \left(\begin{matrix}\left(\left(\begin{matrix}time spent drawing water from faucet of water supply \times \\ cumulative number of use times to draw water from faucet of \\ water supply \times \left(\begin{matrix}happiness index for time spent drawing water \\ from faucet of water supply \times - 1\end{matrix}\right)\end{matrix}\right)+\left(\begin{matrix}time required for water \\ intake \times the cumulative number of use times required for water \\ intake \times \left(\begin{matrix}happiness index for time required for water intake \times \\ - 1\end{matrix}\right)\end{matrix}\right)\right) \\ + \left(\begin{matrix}\left(\begin{matrix}cost required to maintain water supply construction / \\ average hourly wage \times \left(happiness index for labor time\times -1\right)\end{matrix}\right) \\ + \left(\begin{matrix}unhealthy time after water supply construction \times the number \\ of users \times \left(happiness index for unhealthy time\times -1\right)\end{matrix}\right)\end{matrix}\right)\end{matrix}\right)\end{matrix}$

Here, as the value of the happiness index, the happiness index for each action when the data of the "degree of necessity" in the "need information" in FIG. 3 is calculated is input to the item "happiness index" in the "need information". The happiness index when the corresponding service is used increases or decreases depending on a value of the "evaluation" of the matching "service information". In a case of the example of the above-described water supply construction, regarding the action of using a heavy bucket to draw water the "degree of necessity" and the "appropriate provision time" of the "workload reduction: manual labor: water drawing labor" in the "need information" in FIG. 4 are read, and the number of hours exceeding the appropriate provision time deteriorates the happiness index. In the item "appropriate supply quantity", the formula such as the law of diminishing returns is incorporated, so that a numerical value of displeasure time, that is, a negative numerical value of happiness index can be measured. Also in the fund-raising time cost, the happiness index for each labor time when the "appropriate provision quantity" and the "degree of necessity" in the data of the corresponding "workload reduction" in the "need information" in FIG. 3 are calculated is incorporated. The short-time work such as water drawing can be done with enjoyment while camping, but such work during every day camping is not already recognized as leisure. The happiness index for this work is measured on the basis of the "appropriate provision quantity" and necessary labor time exceeding the "appropriate provision quantity". The happiness index changes depending on the category of demander. For example, demanders having a hobby of dance performance practice a dance performance by spending the work achievement time cost, that is, dozens of hours of practice for the actual performance for five minutes, for example. Five minutes for the actual performance is important for them even if it takes an unhealthy time cost called knee injury, and a labor time for managing a lesson fee, a studio fee, and transportation expenses. Therefore, the time for the actual performance corresponds to the happiness index of several thousand times of time in the achievement time cost. The happiness index for the time of the achievement time cost, in other words, corresponds to a value for self-actualizing time.

The significance of the "Value For Time" is as indicated in the following (4).

### (4) Significance

In the conventional Value For Money, only a difference in cost can be measured. On the contrary, in the "Value For Time", it is possible to not only measure a cost portion as a labor time difference necessary for fund-raising but also measure user convenience by an achievement time difference and measure the preservation of the natural environment, the improvement of hygiene conditions and the like as a difference in the unhealthy time cost, so that the profit of the entire society can be widely measured and it can be expected that the economic activity is guided in a direction indicated below. For example, the profit that can be measured to shorten the work achievement time can be guided to the optimization of rules, refugee aid, guarantee of human rights, infrastructure development, and the like. For example, the profit that can be measured to shorten the fund-raising time can be guided to budget constraint solving, low cost of living, hourly wage increase, skill improvement, technological innovation, optimal allocation of resources, and the like. The profit that can be measured to shorten the unhealthy time can be guided to health, peace, eradication of hunger, prevention of accident, incident, and disaster, environmental purification, and the like.

Here, the paper describing the technology as a basis for the "Value For Time" applied to embodiments of the present invention will be introduced as a peer-reviewed paper. <Peer-reviewed paper> Tetsuya OSHIMA (2021) "Value For Time: Effect of policies that give an incentive to increasing free time assessed by the changes in medical payment system" 'International Public Economy Studies' Vol. 32 Note that, hereinafter, the "Value For Time" described in this paper is described as the "Value For Time (peer-reviewed paper)" to be clearly distinguished from the "Value For Time" which is applied to embodiments of the present invention. In this paper, using the medical payment system as a model, this study demonstrated that policies with incentives to increase the "Value For Time (peer-reviewed paper)" can correctly guide the economic activity toward the improvement in profit of people and the entire society while increasing the profit of capitalists. In the section of consideration of this paper, the following description is made. That is, when seeking the "Value For Time (peer-reviewed paper)", the Value For Time" results in an improvement of life quality of people and economic revitalization. For example, it is believed a fact that the market value of GAFA is at all-time high is proof that people seeks the "Value For Time (peer-reviewed paper)". Google (registered trademark) creates the "Value For Time (peer-reviewed paper)" for shortening time required for research, Amazon (registered trademark) creates the "Value For Time (peer-reviewed paper)" for shopping, Facebook (registered trademark) creates the "Value For Time (peer-reviewed paper)" for friendship, and Apple (registered trademark) creates the "Value For Time (peer-reviewed paper)" for contents at a high price. The writer believes that by providing each service at a low price and to be easy to use for everyone, more people use the "Value For Time (peer-reviewed paper)" and purchase the service, so that the market value of GAFA is at all-time high. On the contrary, by focusing the "Value For Money" on only cost reduction, amounts of retained earnings of Japanese companies became at all-time high, but effect that an incentive was not given to the "Value For Time (peer-reviewed paper)" was big. Specifically, in or after 1990, many factories have been moved overseas. The writer believes that this causes leakage of the technology which is a source producing the "Value For Time (peer-reviewed paper)", resulting in drops of the market value and Japan GDP, and leading to the worsening of the employment situation. Actually, Japanese book shops, rental video stores, retail stores, and the like that could not provide the "Value For Time (peer-reviewed paper)" to people due to GAFA were forced to shut down. The value for the business is measured using the theory of the "Value For Time (peer-reviewed paper)", and is used for a system that forecasts the future collective behavior and performs investment that increases profits as many as possible. Since the calculation formula of the "Value For Time" applied to the present invention calculates positive self-actualizing time in contrast with the calculation formula of the "Value For Time (peer-reviewed paper)", the definition is changed from the "preparation time cost" to the "work achievement time cost", and the concept of the "happiness index" is added to each time cost. That is, the "Value For Time" applied to the present invention is novel over the "Value For Time (peer-reviewed paper)". Here, the fact that adding the concept of the "happiness index" makes it possible to numerically measure the happiness of people according to the amount and quality of time is the maximum technical significance. It could not be understood whether simply free time means spare time or self-actualizing and fulfilling time. The fact that adding the concept called the "happiness index" to the "Value For Time" makes it possible to measure an object or thing truly desired by people and use it to forecast the future of people and forecast and control the future stock price or society is the technical significance Systemizing the theory called the simple "Value For Time (peer-reviewed paper)" is of significance.

Furthermore, the measurement of the "Value For Time" will be described below. The "Value For Time" can be measured on the basis of a time cost of the existing business - a time cost of the new business. Here, the existing business is a business that most people use currently among services satisfying the need. The new business refers to the service that has been matched in step S7 described above. For example, when the "animation: SF" on the first line in the matching list is used as an example, the existing business is a rental video business of the "XX rental vide Co. Ltd.". As described above, since time cost = work achievement time cost + fund-raising time cost + unhealthy time cost, the measurement is as follows. The work achievement time cost of the existing business is measured as follows, for example. $\begin{matrix}\left(Time spent watching SF animation\times \left(\begin{matrix}happiness index for time \\ spent watching SF animation \times - 1\end{matrix}\right)\right) \\ + \left(\begin{matrix}time required to rent and return DVD \left(registered trademark\right) \\ in rental video store \times \left(\begin{matrix}happiness index for time required to \\ rent and return DVD \left(registered trademark\right) in rental video \\ store \times - 1\end{matrix}\right)\end{matrix}\right. \\ + \left(\begin{matrix}time spent looking for DVD \left(registered trademark\right) in store \\ \times \left(happiness index for time spent looking for DVD \left(\begin{matrix}registered \\ trademark\end{matrix}\right) in store\times -1\right)\end{matrix}\right. \\ + \left(\begin{matrix}time spent inquiring due date if DVD has already been \\ borrowed by another person \times \left(\begin{matrix}happiness index for time spent \\ inquiring due date if DVD has already been borrowed by another \\ person \times - 1\end{matrix}\right)\end{matrix}\right) \\ + \left(\left(\begin{matrix}time required to go to rent desired SF animation to another \\ store or at later date again due to stockout \times \left(\begin{matrix}happiness \\ index for time required to go rent desired SF animation to \\ another store or at a later date again due to stockout \times - 1\end{matrix}\right) \times \\ probability of stockout of desired content\end{matrix}\right)\right. \\ + \left(\begin{matrix}\left(\begin{matrix}time spent applying membership to rental video store \times \\ \left(\begin{matrix}happiness index time spent applying membership to rental \\ video store \times - 1\end{matrix}\right)\end{matrix}\right) / borrowing rate of SF animation in rental \\ video store\end{matrix}\right)\end{matrix}$ The fund-raising time cost of the existing business is measured as follows, for example. 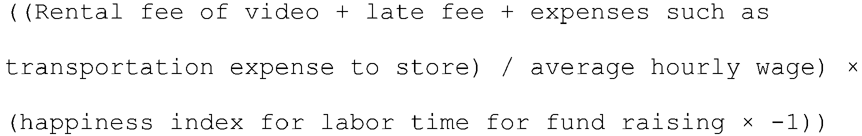 ((Rental fee of video + late fee + expenses such as transportation expense to store) / average hourly wage) × (happiness index for labor time for fund raising × -1)) The unhealthy time cost of the existing business is measured as follows, for example. $\begin{matrix}\left(\begin{matrix}Time spent feeling unwell due to excessive DVD watching \times \\ \left(\begin{matrix}happiness index for the number of hours spent feeling unwell \\ due to excessive DVD watching \times - 1\end{matrix}\right)\end{matrix}\right) \\ + \left(time of stress due to late fee\times \left(\begin{matrix}happiness index for time \\ of stress due to late fee \times - 1\end{matrix}\right)\right)\end{matrix}$ Here, the new business is video streaming on an internet channel. Therefore, the time cost of the new business is measured as follows. Time cost of new business = work achievement time cost + fund-raising time cost + unhealthy time cost
Here, the work achievement time cost of the new business is measured as follows, for example. $\begin{matrix}\left(Time spent watching SF animation\times \left(\begin{matrix}happiness index for time \\ spent watching SF animation \times - 1\end{matrix}\right)\right) \\ + \left(\begin{matrix}time spent researching video of favorite SF animation \times \\ \left(\begin{matrix}happiness index for time spent researching video of favorite \\ SF animation \times - 1\end{matrix}\right) + \left(\begin{matrix}time spent setting personal computer / \\ utilization rate of personal computer at its need\end{matrix}\right) \times \\ \left(\begin{matrix}happiness index for time spent setting personal computer \times - \\ 1\end{matrix}\right)\end{matrix}\right) \\ + \left(\begin{matrix}time spent setting Internet environment / utilization rate \\ of Internet at its need\end{matrix}\right) \times \left.\left(\begin{matrix}happiness index for time spent \\ setting Internet environment \times - 1\end{matrix}\right)\right)\end{matrix}$ The fund-raising time cost of the new business is measured as follows, for example. 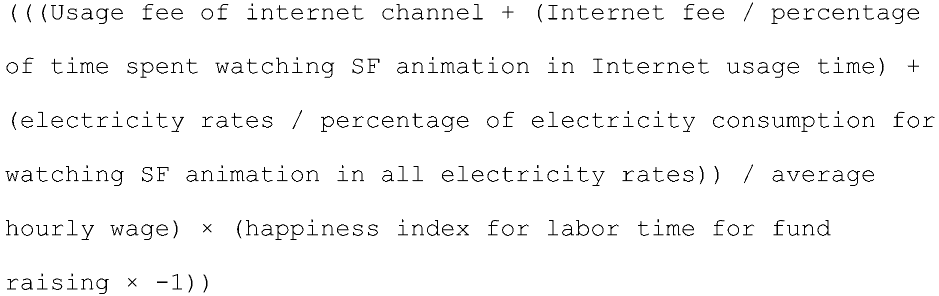 (((Usage fee of internet channel + (Internet fee / percentage of time spent watching SF animation in Internet usage time) + (electricity rates / percentage of electricity consumption for watching SF animation in all electricity rates)) / average hourly wage) × (happiness index for labor time for fund raising × -1)) The unhealthy time cost of the new business is measured as follows, for example. 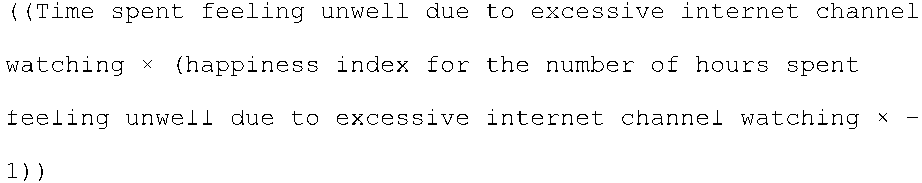 ((Time spent feeling unwell due to excessive internet channel watching × (happiness index for the number of hours spent feeling unwell due to excessive internet channel watching × - 1)) Therefore, when combining into a single equation, the equation is as follows. Value For Time of business called internet channel = (((Time spent watching SF animation × (happiness index for time spent watching SF animation × -1)) + ((time required to rent and return DVD (registered trademark) in rental video store × (happiness index for time required to rent and return DVD (registered trademark) in rental video store × -1)) + ((time spent looking for DVD (registered trademark) in store × (happiness index for time spent looking for DVD (registered trademark) in store × -1)) + ((time spent inquiring due date if DVD has already been borrowed by another person × (happiness index for time spent inquiring due date if DVD has already been borrowed by another person × -1)) + ((time required to go rent desired SF animation to another store or at later date again due to stockout × (happiness index for time required to go rent desired SF animation to another store or at a later date again due to stockout × -1) × probability of stockout of desired content)) + ((time spent applying membership to rental video store × (happiness index for time spent applying membership to rental video store × -1)) / borrowing rate of SF animation in rental video store))) + ((rental fee of video + late fee + expenses such as transportation expense to store) / average hourly wage) × (happiness index for labor time for fund raising × -1)) + (time spent feeling unwell due to excessive DVD watching × (happiness index for the number of hours spent feeling unwell due to excessive DVD watching × -1)) + (time of stress due to late fee × (happiness index for time of stress due to late fee × -1))) - ((time spent watching SF animation × (happiness index for time spent watching SF animation × -1)) - (time spent researching video of favorite SF animation × (happiness index for time spent researching video of favorite SF animation × -1) + (time spent setting personal computer / utilization rate of personal computer at its need) × (happiness index for time spent setting personal computer × -1)) + (time spent setting Internet environment / utilization rate of Internet at its need) × (happiness index for time spent setting Internet environment × -1)) + (((usage fee of internet channel + (Internet fee / percentage of time spent watching SF animation in Internet usage time) + (electricity rates / percentage of electricity consumption for watching SF animation in all electricity rates)) / average hourly wage) × (happiness index for labor time for fund raising × -1)) + ((time spent feeling unwell due to excessive internet channel watching × (happiness index for the number of hours spent feeling unwell due to excessive internet channel watching × -1)) Since the personal computer is normally used for various purposes such as paperwork or game, regarding the time spent setting the personal computer, the utilization rate is calculated according to the used hours in total used hours of the personal computer at its need, the time rate is added as the work achievement time spent setting the personal computer for the corresponding need. All the services such as Internet setting are also calculated in the same manner.

Returning to the flowchart in FIG. 2, in step S9 of forecasting the collective behavior, the information processing unit 102 forecasts the collective behavior. Since people use the service with the "Value For Time", it is forecasted to use the service with large "Value For Time" measured in step S7 described above. In addition, the information processing unit 102 forecasts and measures which services people will change from using and which services people will change to using on the basis of the number of people served, maximum number of people served, implementation degree, and the like in the "service information" in FIG. 4, and the corresponding forecast result is input to "collective behavior forecast" in the "matching list" in FIG. 5.

Specifically, for example, it is assumed that an internet service provider has published new service providing optical communication service allowing stable large-volume data communication at a low cost. The present system collects the information of new optical communication service through "step S1 of acquiring information", and stores appropriate information in each data DB through processes from step S2 through S6. Although regarding the items "user's required environment" and "provider's required environment" in the "service information", the conventional video streaming service does not satisfy the "user's required environment", low data traffic becomes a bottleneck, and the image quality does not satisfy the need due to a low resolution on a small screen and frequent communication interruption, it is forecasted that this new optical communication service enables a user to enjoy the same degree of video quality as the quality when watching a DVD (registered trademark) video by exceeding the threshold of the "user's required environment". Then, as the service satisfying the need "hobby: video watching: animation: SF; Japanese" of the "service name" in the "matching list" in FIG. 5, "⊚⊚ internet channel: hobby: video watching: animation: SF; Japanese" of the "service name" is matched, and a different in time cost is measured as compared with "xx rental video" of the "existing business" in which the number of users having enjoyed videos until now is the most. A difference between a time cost such as the roundtrip time to the rental video store, labor time for earning money for rental video fee and transportation expense, and time spent worrying about late fee to be paid if the video is overdue and a time cost such as labor time for earning usage fee of the video streaming service, and time shortened by enabling watching with one click any time in between time, thereby getting relief from stress, that is, a time cost difference between new and old services is measured, and is input to the item "Value For Time". Since people use the service with large "Value For Time", it is forecasted that the demand is switched from the rental video store to internet distribution service. It is forecasted what is the probability of the user switching this service and when the user switches the service on the basis of the date on which each business operator having the "service information" publishes start of service, the item "implementation degree", and the "reliability" showing the estimated value, and the forecasted result is stored in the "collective behavior forecast".

Here, as a specific example, the "number of acquired new customers" as an example of the "collective behavior forecast" is considered in a case where the existing businesses A to C fall within the service area of the corresponding business. The number of acquired new customers is measured as follows, for example. The number of acquired new customers = new customer acquisition coefficient α × (1 - (time cost per person of corresponding business × implementation degree of corresponding business) / (time cost per person of existing business A × implementation degree of existing business A) × the number of demanders within business area of new and old business) + new customer acquisition coefficient α × (1 - (time cost per person of new business × implementation degree of new business) / (time cost per person of existing business B × implementation degree of existing business B) × the number of demanders within business area of new and old business) + new customer acquisition coefficient α × (1 - (time cost per person of new business × implementation degree of new business) / (time cost per person of existing business C × implementation degree of existing business C) × the number of demanders within business area of new and old business) Here, when referring to first line in the matching list as an example, in the range of video streaming on the "internet channel", the number of acquired new customers is measured on the basis of an amount of time cost reduction and the number of demanders as compared with video streaming in the "internet channel" of the service that is most frequently used among existing businesses in the service areas of the rental video store A, the rental video store B, and online retail business C of DVD (registered trademark).

Returning to the flowchart in FIG. 2, in step S10 of analyzing change adjustment, the information processing unit 102 analyzes the relevant service and how the effect of the "Value For Time" in the matching list measured above affects the relevant service. For example, regarding the water supply business, the demands such as "user's required environment", "provider's required service", and the "relevant service" in the "service information" in FIG. 4 are expected to increase in conjunction with each other. By introducing the water supply, an increase in population is forecasted, and therefore, the relevant service needs are expected to change. These changes are adjusted, and the adjustment is added to the "collective behavior forecast" in the "matching list" in FIG. 5.

Specifically, for example, the information processing unit 102 can forecast that the sales of the tenant company that has lent a space to the rental video store decrease on the basis of the result of the collective behavior forecast in step S9. The information processing unit 102 records these changes in adjustment in the business operator DBs for upstream and downstream of supply chain. Here, for example, it is assumed that an internet service provider has published new service providing optical communication service allowing stable large-volume data communication at a low cost that is required for the "user's required environment" and the "provider's required environment" in the "service information". It is assumed that the present system collects the information of new optical communication service through "step S1 of acquiring information", and appropriately stores the collected information in each data DB through processes from step S2 through S6. In this case, although regarding the items "user's required environment" and "provider's required environment" in the "service information", the conventional video streaming service does not satisfy the "user's required environment", low data traffic becomes a bottleneck, and the image quality does not satisfy the need due to a low resolution on a small screen and frequent communication interruption, it is forecasted in step S10 that this new optical communication service enables a user to enjoy the same degree of video quality as the quality when watching a DVD (registered trademark) video by exceeding the threshold of the "user's required environment"
It is forecasted in step S10 that the employment situation changes due to changes of the "provider's required labor time" and the like. The users may be drawn to the service providing the "alternative needs" in the "need information". In this manner, in step S10, for example, the information processing unit 102 estimates the effect of the business change caused by a change in relationship between upstream and downstream of supply chain on a different business, and writes how much the number of customers and sales are changed by what time into the "collective behavior forecast" in the "matching list DB".

In step S11 of forecasting the business performance, the information processing unit 102 forecasts the business performance. The above forecast is the forecast for each subdivided service, and the normal business operator provides a plurality of services. Therefore, the information processing unit 102 inputs an estimated value of integrated business operator profit variation for each business operator to the item "profit variable business operator" in the "matching list" in FIG. 5.

In step S12 of forecasting the volatile investment destination, the information processing unit 102 inputs the volatile investment destination for each matching list to the "volatile investment destination" in the matching list" in FIG. 5. In a case where processing is slow due to a lot of data, the data is input preferentially from high-volatility investment destination.

In step S13 of asking whether the business operator is aware of the situation, the information processing unit 102 checks whether the business operator providing the service with respect to the need in the above-described matching list is aware of the situation. The information processing unit 102 determines estimates and determines the situation with reference to the "service" in FIG.6 , the "related business operator", and the "trading business operator" in the "business operator information" and on the basis of news of big data.

Specifically, for example, referring to the first line in the matching list as an example, although many potential needs of Japanese animation SF exist in the Arabic-speaking world, the business operator misses a business opportunity without streaming in the Arabic-dubbed version or with Arabic subtitles. Alternatively, even when prodigious technology and service are produced, there are a case where the practical use and the commercialization at a cost making a profit cannot be achieved or the sales as expected cannot be achieved due to difficulties in sales, and a case where the developed company itself is not aware of the potential needs of the technology and service. For example, TDK which is Japanese company developed magnetic absorption paint. Although TDK developed this technology to improve the sound quality of a cassette recorder, the United States Department of Defense purchases this patent, and the magnetic absorption paint is currently used for stealth fighters. The company having developed in this way often utilizes the technology and service in only a handling range of its own business, and misses the potential needs and markets. For example, from the news that Toppan Printing Co., Ltd. changed its name to "TOPPAN", it is determined that the possibility of providing the services other than print industry increases. If these values are a certain threshold or less, it is determined as "NO", the process proceeds to step S19 of creating a report. The forecasts in the matching lists described above do not hold and therefore, existing services are used, but it means that the underlying business opportunity exists. In a case where there has been no progress in technology investment and business tie-up in spite of these potential needs, it is determined as "NO", the process proceeds to step S19 creating a report. On the contrary, in a case where there has been progress, it is determined as "YES", the process proceeds to step S14 of asking whether there are other possibilities.

In step S14 of asking whether there are other possibilities, processes of steps S7 to S13 are repeatedly performed, and the processes are continued until the "matching lists" of all patterns affected by changes made this time are created. The deadline so as not to miss business opportunities is defined as a threshold, it is determined as "NO" when the threshold is exceeded or after the measurement of all the "matching lists" has been completed, and the process proceeds to step S15 of analyzing highest profit settlement.

In step S15 of analyzing highest profit settlement, the information processing unit 102 measures a difference between data of the item "volatile investment destination" in FIG. 5 and a stock price of the "stock information" in FIG. 7, and analyzes the timing and method of investment to perform the investment settlement for the highest profit. At this time, the financial technology as much as possible is used. Although not illustrated in the drawings, the similar processing is also performed for the "real estate information", the "resource information", the "crowdfunding information", and the like. It is possible to increase investment destination DBs corresponding to the other investment targets, if any, so that the similar processing can be performed.

In step S16 of performing the investment settlement, the information processing unit 102 automatically performs the investment settlement on each investment market according to the analysis in the previous step, or performs the investment settlement by issuing a report to a manager and a user. Although not illustrated in FIG. 1, it is possible to withdraw funds from an account and appropriately deposit profits obtained from the investment in conjunction with a banking system.

In step S17 of asking whether it is as expected, the information processing unit 102 checks whether the result of the investment settlement and a series of realities transition as expected. When the present system expects only differences within a predetermined threshold, it is determined as "YES", the process ends (END). On the contrary, when a difference between the forecast and the reality exceeds the threshold, it is determined as "NO", and the process proceeds to step S18 of analyzing wrong forecast.

In step S18 of analyzing wrong forecast, the information processing unit 102 analyzes where a difference between the reality and the forecast exists. The information processing unit 102 analyzes a wrong forecast portion. For example, when the forecast is wrong due to delay of a certain service from a scheduled date published by the company, the information processing unit 102 must revise the too high data of the "implementation degree" in the "service information" in FIG. 4 downward, and therefore, corrects the corresponding portion in each DB that corresponds to the analysis result. This makes it possible to continue to improve the accuracy of the forecast.

In step S19 of creating a report, the portion corrected in the process of step S18, a portion where wrong forecast is analyzed but the cause cannot be identified, a case where it was determined as "YES" in step S13 of asking whether the business operator is aware of the situation but the forecast is wrong because the corresponding business operator does not provide the service, and the like have high values as business opportunities and improvement points, and therefore, the information processing unit 102 creates a report about the presence of potential needs. In addition, the information processing unit 102 creates the accuracy of the entire forecasts as a report.

In the present system, the needs of all human beings are stored, and the needs and the services satisfying the needs are covered by matching lists, so that it is possible to provide advice for missing needs and markets. Even when the practical use and the commercialization at a cost making a profit cannot be achieved or the sales as expected cannot be achieved due to difficulties in sales, the service information of all human beings is stored in the present system, so that it is possible to provide advice for the corresponding company to promote business tie-up with the company capable of eliminating bottlenecks. Even when the forecast of stock price does not reach the expected value by the expected date and time and is wrong, eliminating the bottlenecks in this manner makes it possible to use the technology and service as efficiently as possible in human beings, increase the stock price even when taking longer than forecasted date and time, and increase the profit. Even when the company having developed does not introduce the advice of the present system, it is possible to sell itself to competitors and increase the profit in any case.

In step S20 of transmitting a report, the information processing unit 102 transmits the report created in the process in step S19 according to a member class and a manager input in the "user information DB". For example, it can be determined that the report is transmitted only to the manager if it is internally processed, and the business opportunities and improvement proposals such as missing of potential needs can be transmitted by adjusting the scope of disclosure and the timing according to the member class. When the process of step S20 is completed, the process ends (END).

Note that each step illustrated in FIG. 2 is an example, the order can be exchanged, and the steps can be added and changed.

Although embodiments of the present invention have been described above, the present invention is not limited to the above-described embodiments, and modifications and improvements within a range in which the object of the present invention can be achieved are included in the present invention.

For example, configurations and flows illustrated in FIGS. 1 and 2 are merely examples for achieving the object of the present invention, and are not particularly limited to particular ones.

The series of processes described above can be executed by hardware or can be executed by software. A single functional block may be configured only by hardware, only by software, or by a combination thereof.

When the series of processes are executed by software, a program configuring the software is installed in a computer or the like from a network or a recording medium. The computer may be incorporated in dedicated hardware. The computer may also be a general-purpose smartphone or personal computer, as well as a server, for example, as computers capable of executing various functions by installing various programs.

A recording medium including such a program may be configured not only by a removable medium (not illustrated) separately distributed from a main body of the device to provide the program to a user, but also by a recording medium provided to a user or the like in a state of being incorporated in the main body of the device in advance.

In this specification, steps describing a program recorded in a recording medium include processes executed in chronological order according to the sequence, as well as processes not necessarily executed chronologically but executed in parallel or individually.

### EXPLANATION OF REFERENCE NUMERALS

001 Network, 002 Big data, 003 Stock market system, 004 Real estate market system, 005 Resource market system, 006 Crowdfunding system, 100 System server, 101 Information acquisition unit, 102 Information processing unit, 110 Storage unit, 111 Need information, 112 Service information DB, 113 Matching list DB, 114 Business operator information DB 114, 115 Stock information DB, 116 Real estate information DB, 117 Resource information DB, 118 Crowdfunding DB 118, 119 User DB 119, 200 Manager terminal, 300 User terminal, 999 Automatic investment system

## Claims

1. An information processing system, comprising:
a "Value For Time" measuring unit for numerically measuring a "Value For Time" indicating a value of a business on a basis of a difference in time cost between an existing business and a new business, the number of users, and a happiness index.

2. The information processing system according to claim 1, further comprising:
a matching unit for matching predetermined one or more pieces of need information among one or more pieces of need information with predetermined one or more pieces of service information among one or more pieces of service information on a basis of the one or more pieces of need information storing needs of one or more human beings and the one or more pieces of service information storing a business that is able to satisfy at least a part of the needs, wherein
the "Value For Time" measuring unit numerically measures the "Value For Time" on the basis of a matching result by the matching unit.

3. The information processing system according to claim 2, further comprising:
a collective behavior forecasting unit for measuring a collective behavior forecast that is a forecast of which services people will change from using and which services people will change to using on the basis of the matching result by the matching unit and the "Value For Time".

4. The information processing system according to claim 3, further comprising:
a settlement unit for analyzing information including stock information, real estate information and resource information on the basis of the collective behavior forecast, the service information and business operator information for a business operator providing the service, determining investment transaction for a profit as high as possible on the basis of a result of the analysis, and making settlement of the investment transaction.

5. The information processing system according to claim 3, further comprising:
a report unit for reporting business opportunities or improvement proposals to a business operator on the basis of an information group including at least the collective behavior forecast, the service information, and the business operator information for the business operator providing the service, and information about a relevant company.

6. The information processing system according to claim 3, further comprising:
an accuracy check unit for checking accuracy of the collective behavior forecast on the basis of a difference between the collective behavior forecast and reality; and
a system improvement unit for improving forecasting accuracy of the collective behavior forecasting unit on the basis of a check result by the accuracy check unit.
